# DEMANDE DE BREVET EUROPEEN

(11) **EP 2 410 469 A1**
(43) Date de publication de la demande: **25.01.2012**
(21) Numéro de dépôt: 10170047.4
(22) Date de dépôt: 19.07.2010
(51) Int. Cl.: G06K 19/077, G06F 1/16, G06F 3/06

(54) **Adaptateur de connexion d'un appareil hôte à un réseau numérique de communication**

(71) Demandeur: SmarDTV S.A., 1033 Cheseaux-sur-Lausanne (CH)
(72) Inventeur: Lambert, Marc, 13390 Auriol (FR)
(74) Mandataire: Leman Consulting S.A.

(57) **Abrégé**

Un but de la présente invention est de fournir un adaptateur permettant de connecter à un réseau de communication un appareil hôte sans modifier sa configuration au niveau matériel en utilisant un connecteur initialement prévu pour l'insertion d'une carte optionnelle. L'adaptateur comprend un corps de carte ayant une première extrémité, munie de contacts, destinée à l'insertion dans une fente de carte aménagée sur l'appareil hôte et une seconde extrémité, opposée à la première extrémité, solidaire à un boîtier destiné à être relié au réseau de communication. L'adaptateur comporte des contacts qui s'étendent selon une première rangée sur une face le long du bord de la première extrémité du corps de carte et selon une seconde rangée sur l'autre face le long du bord du corps de carte de sorte que les deux rangées sont placées l'une en regard de l'autre avec les contacts d'une rangée disposés en symétrie miroir par rapport aux contacts de l'autre rangée. Le contour du corps de carte est symétrique par rapport à un axe de symétrie perpendiculaire aux extrémités du corps de carte, de manière à assurer une insertion dans un sens quelconque du corps de carte dans la fente de l'appareil hôte.

## Description

### Domaine de l'invention

La présente invention concerne le domaine des modules d'accès conditionnel qui se connectent à des unités multimédias de télévision numérique telles que des décodeurs connus sous le nom de set top box, ordinateurs personnels, ou des téléviseurs etc. Plus particulièrement, l'objet de l'invention se situe au niveau d'un l'interfaçage du module d'accès conditionnel avec un réseau numérique de communication.

### Arrière plan technique

De nombreuses unités multimédia comme par exemple des décodeurs de télévision numérique, ainsi que des téléviseurs avec récepteur numérique intégré et des ordinateurs personnels équipés des interfaces adéquates utilisent pour le contrôle de l'accès aux données numériques audio/vidéo télédiffusées et leur désembrouillage un module d'accès conditionnel CAM (Conditional Access Module). Typiquement, ce module se présente sous la forme d'un boîtier normalisé détachable muni d'un lecteur de carte à puce et d'un connecteur compatible avec une interface de l'unité multimédia. Un exemple est décrit dans le brevet US6324064B1.

Un tel module CAM fourni par un opérateur de télévision à péage désembrouille un ou des flux de données audio/vidéo en provenance d'un câble, d'un émetteur terrestre hertzien, d'un satellite, d'un serveur Internet via un réseau de communication câblé ou sans fil (WebTV, IPTV) en fonction de clés ou mots de contrôle reçus de l'élément dédié à l'accès conditionnel. Ce dernier élément, chargé de la sécurité de la décryption des clés de désembrouillage et droits d'accès conditionnel, consiste généralement en une carte à puce ou module de sécurité, insérée dans le lecteur du module d'accès conditionnel CAM, réputée inviolable dans laquelle les droits d'un utilisateur sont stockés.

Des messages contenus dans les flux télédiffusés consistant en des messages de contrôle ECM (Entitlement Control message) et des messages d'administration des droits EMM (Entitlement Management Message) sont dirigés vers le module de sécurité qui dispose des clés de transmission nécessaires à la décryption de ces messages. Les mots de contrôle (CW) contenus dans les messages de contrôle ECM sont décryptés puis retournés au module de désembrouillage si et seulement si les droits d'accès conditionnels sont présents et vérifiés par le module de sécurité.

Un module CAM est en général relié à une unité multimédia hôte via une interface commune DVB-CI (Digital Video Broadcasting - Common Interface) définie par la norme européenne EN50221 "Common Interface Specification for Conditional Access and other Digital Video Broadcasting Decoder Applications" éditée par le CENELEC (Comité Européen de Normalisation Électrotechnique). Ce document décrit une interface commune en normalisant la structure des données, le codage des canaux, les informations de service, l'interface avec l'unité hôte et avec le système d'accès conditionnel. Ce dernier est utilisé pour contrôler l'accès à un service diffusé consistant en un ensemble de flux élémentaires offert à l'utilisateur sous forme d'un programme de télévision par exemple. Selon ce document, le module CAM exécute des applications en communicant avec l'unité hôte et en fournissant à l'utilisateur des fonctionnalités complémentaires à celles incluses dans l'unité hôte telles que le système d'accès conditionnel ou un guide électronique de programmes. Il est en outre compatible au format PCMCIA (Personal Computer Memory Card International Association), USB (Universal Serial Bus) ou autre.

Le document US5391094 décrit un dispositif d'interfaçage comprenant une carte insérée dans une fente d'un terminal de communication et un adaptateur séparé de la carte avec un corps en forme de boîtier. Une extrémité de la carte est équipée d'un connecteur configuré pour la connexion de la carte au terminal et l'autre extrémité est munie d'un connecteur pour la connexion avec l'adaptateur. Le boîtier de l'adaptateur comporte sur une première partie un connecteur correspondant à celui de la carte et sur une autre partie un connecteur de réseau de communication. Un circuit électronique d'interface est disposé à l'intérieur du boîtier entre le connecteur de la carte et le connecteur de réseau.

### Description sommaire de l'invention.

Un but de la présente invention est de fournir un adaptateur permettant de connecter à un réseau de communication un appareil hôte sans modifier sa configuration au niveau matériel en utilisant un connecteur initialement prévu pour l'insertion d'une carte optionnelle.

Ce but est atteint par un adaptateur pour connecter un appareil hôte à un réseau numérique de communication, ledit adaptateur comprend un corps de carte ayant une première extrémité, munie de contacts, destinée à l'insertion dans une fente de carte aménagée sur l'appareil hôte et une seconde extrémité, opposée à la première extrémité, solidaire à un boîtier destiné à être relié au réseau numérique, l'adaptateur est caractérisé en ce que les contacts s'étendent selon une première rangée sur une face le long du bord de la première extrémité du corps de carte et selon une seconde rangée sur l'autre face le long du bord du corps de carte de sorte que les deux rangées sont placées l'une en regard de l'autre avec les contacts d'une rangée disposés en symétrie miroir par rapport aux contacts de l'autre rangée, et en ce que le contour du corps de carte est symétrique par rapport à un axe de symétrie perpendiculaire aux extrémités du corps de carte, de manière à assurer une insertion dans un sens quelconque du corps de carte dans la fente de l'appareil hôte.

Selon une application préférée, l'appareil hôte est un module d'accès conditionnel CAM muni d'une fente permettant d'insérer une carte mémoire du format SD par exemple. La forme et les contacts du corps de carte de l'adaptateur sont par conséquent compatibles avec ceux de la carte mémoire SD.

Bien entendu, hormis les module d'accès conditionnel CAM, un adaptateur selon l'invention peut être utilisé avec d'autres appareils hôte comportant une fente d'insertion prévue pour une carte mémoire, comme par exemple : des ordinateurs portables, assistant personnels PDA, décodeurs de télévision à péage, téléviseurs, etc.

Le corps de carte de l'adaptateur n'est pas limité au format SD et peut être réalisé pour d'autres formats tel que : MiniSD, MicroSD, CompactFlash, Memory Stick, MultiMediaCard MMC, SmartMedia, XD Picture Card, etc.

La connexion au réseau de communication, par exemple de type Ethernet, de l'adaptateur peut être réalisée soit par l'intermédiaire d'une embase réseau montée sur le boîtier pour un câble muni d'une prise réseau correspondante, soit par une portion de câble avec une extrémité connectée directement au boîtier et l'autre extrémité munie d'un connecteur réseau ou encore via une interface sans fil.

Grâce à la géométrie symétrique du corps de carte et à la disposition en symétrie miroir des rangées de contacts l'une en regard de l'autre le long du bord du corps de carte, l'adaptateur peut s'insérer dans la fente de l'appareil hôte indifféremment dans un sens ou dans l'autre.

### Brève description des figures

L'invention sera mieux comprise grâce à la description détaillée qui va suivre en se référant aux dessins annexés dans lesquels :
La figure 1 illustre une variante de l'adaptateur dans laquelle le boîtier comporte une embase destinée à la connexion d'un câble réseau.
La figure 2 illustre une variante de l'adaptateur dans laquelle le boîtier comporte une portion de câble avec une extrémité attachée directement au boîtier et l'autre extrémité est munie d'un connecteur pour câble réseau.
La figure 3 illustre une variante de l'adaptateur dans laquelle le boîtier contient une interface de connexion à un réseau sans fil.
La figure 4 montre une vue frontale schématique du bord du corps de carte avec les rangées de contacts disposées sur chaque face en symétrie miroir.
La figure 5 montre une vue de dessus d'une face du corps de carte avec une rangée de contacts disposée le long d'un bord.
La figure 6 montre une vue schématique d'un adaptateur connecté à un module d'accès conditionnel CAM inséré dans un connecteur approprié d'un téléviseur.

### Description détaillée de l'invention

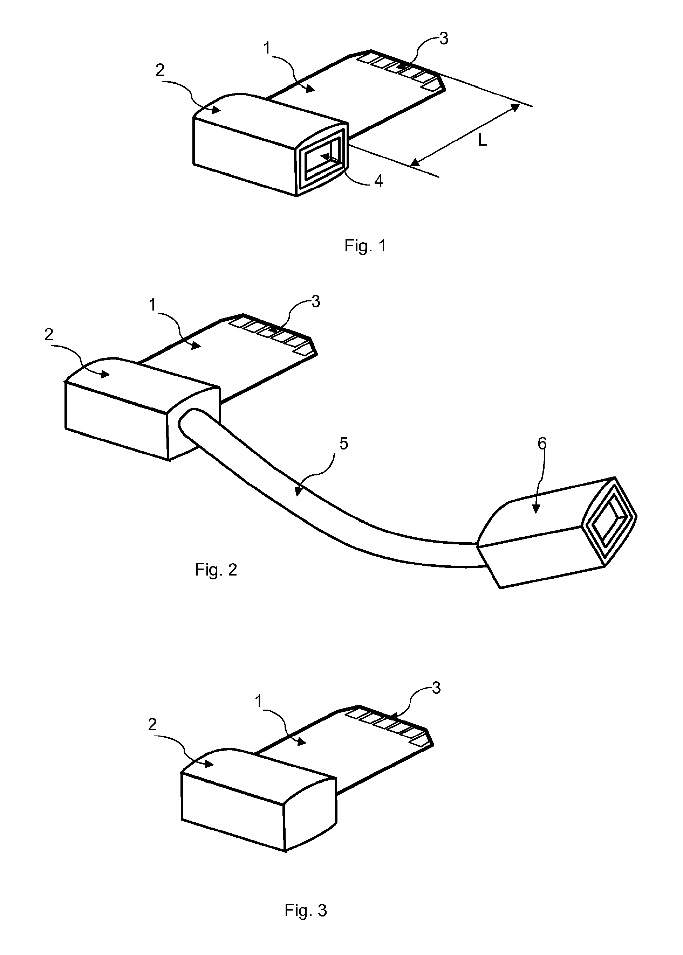

Les variantes illustrées par les figures 1 à 3 correspondent à une configuration préférée de l'adaptateur avec un format du corps de carte 1 et une disposition des contacts de la rangée de contacts 3 basées sur une carte mémoire du type SD (Secure Digital). Le boîtier 2 est monté à l'extrémité du corps de carte 1 opposée à celle portant les contacts de sorte que la longueur L du corps de carte 1 reste suffisante pour une insertion correcte dans la fente de l'appareil hôte.

Le boîtier 2 sert à la fois à loger un circuit électronique de conversion des signaux échangés entre l'appareil hôte et le réseau de communication et à faciliter la saisie de l'adaptateur lors de son insertion ou de son retrait. Le corps de carte comprend une pluralité de conducteurs, généralement imprimés, sur chaque face reliant le circuit électronique du boîtier aux contacts de chaque rangée.

Selon une première variante le boîtier 2 comprend une embase 4 disposée sur une des faces latérales. Cette embase 4 permet de connecter une portion de câble munie d'un connecteur compatible à une extrémité tandis que l'autre extrémité de la portion de câble est reliée au réseau de communication.

Selon une seconde variante, le boîtier 2 comporte une portion de câble 5 fixées sur une des faces latérales de sorte que la portion de câble 5 soit dirigée dans une direction parallèle aux extrémités du corps de carte 1. L'autre extrémité de la portion de câble comporte un connecteur 6 configuré pour la connexion de l'adaptateur au réseau de communication.

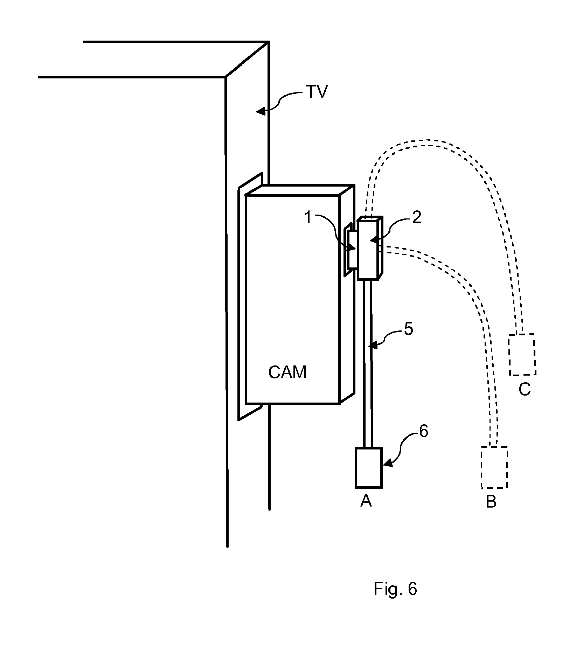

Etant donné que l'adaptateur est destiné à être utilisé pour connecter un module d'accès conditionnel CAM à un réseau de communication et que ce module CAM est généralement inséré verticalement dans un connecteur situé sur une face latérale d'un téléviseur TV, la disposition de l'embase 4 ou de la portion de câble 5 sur une face latérale du boîtier devient avantageuse. En effet, comme illustré par la figure 6 à la position A, la portion de câble 5 est dirigée verticalement vers le bas parallèlement à la fente d'insertion du module CAM dès la sortie du câble hors du boîtier 2 de l'adaptateur. Cette disposition verticale et rectiligne du câble est la même qu'il s'agisse de la variante de l'adaptateur avec embase de la figure 1 ou de la variante avec la portion de câble directement attachée au boîtier.

Avec une sortie de câble placée sur la face frontale ou sur la face latérale opposée du boîtier 2, le câble forme une courbe comme illustré par la figure 6 aux positions B, respectivement C. L'expérience a montré qu'un câble formant une courbe exerce des forces de traction et de cisaillement plus grandes sur l'adaptateur connecté qu'un câble droit sortant du boîtier (position A).

De plus, la symétrie de l'adaptateur permet de le connecter de sorte que la portion de câble 5 soit toujours dirigée vers le bas (position A) quel que soit le sens d'insertion du module CAM dans le connecteur du téléviseur TV ou quel que soit le côté latéral droite ou gauche du téléviseur TV sur lequel se trouve le connecteur du module CAM.

La disposition rectiligne de la portion de câble 5 permet de minimiser les forces de traction et de cisaillement exercées par une même portion de câble sortant du boîtier 2 en formant une courbe (positions B et C). Ces forces non souhaitables provoquent soit une déconnexion intempestive de l'adaptateur, soit des contraintes au niveau des contacts du corps de carte et de ceux du module CAM qui peuvent être désalignés et engendrer des coupures de contact ou des courts-circuits.

Selon une troisième variante, le boîtier de l'adaptateur ne comprend aucun connecteur extérieur ou câble comme illustré par la figure 3. La connexion au réseau de cette variante s'effectue par une interface de connexion sans fil logée dans le boîtier 2 de type WiFi (Wireless Fidelity), réseau mobile 3G ou tout autre réseau à haut débit de données.

Dan ce cas, le problème des contraintes dues au câble illustré par la figure 6 ne se pose plus. Cependant, les aspects de symétrie de l'adaptateur permettant de le connecter dans un sens ou dans l'autre restent un avantage tant au niveau facilité de mise en oeuvre qu'au niveau de la manipulation excluant toute fausse manoeuvre.

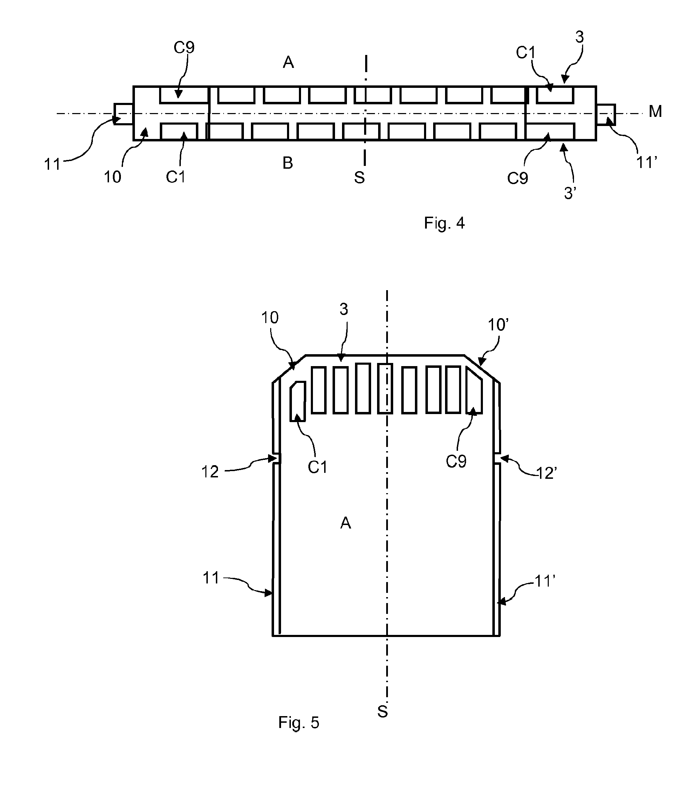

Les figures 4 et 5 illustrent le cas particulier basé sur l'utilisation d'une carte mémoire du type SD pour réaliser le corps de carte 1 de l'adaptateur.

Une carte mémoire du type SD standard est asymétrique avec une rangée de contacts 3 sur une seule face et un angle coupé 10 à proximité du premier contact C1 de la rangée 3 servant de détrompeur. Cette configuration asymétrique normalisée permet une introduction de la carte dans la fente de l'appareil dans un sens unique.

Dans le cas de l'adaptateur selon l'invention, les dimensions du corps de carte sont équivalentes à celle de la carte mémoire du type SD standard et le contour de carte est symétrique d'axe S. En effet, un angle coupé 10' se retrouve symétriquement à proximité du dernier contact C9 avec les mêmes dimensions que l'angle coupé 10 à proximité du premier contact C1.

Afin de rendre l'adaptateur également symétrique au point de vue connexion électrique, la rangée 3 de contacts normalisée d'une carte du type SD sur une face A est reproduite sur l'autre face B du corps de carte 1 de sorte que le premier contact C1 d'une rangée 3 sur une face soit en regard du dernier contact C9 de l'autre rangée 3' sur l'autre face B. Autrement dit, les rangées de contacts 3 et 3' sont placées l'une en regard de l'autre en symétrie miroir d'axe M l'une par rapport à l'autre.

Il est à noter que l'épaisseur du corps de carte 1 de l'adaptateur correspond à l'épaisseur normalisée d'une carte du type SD. Les glissières 11 et 11' normalisées sur chaque côté latéral permettent une insertion facilitée dans la fente et une stabilité du corps de carte 1 connecté lorsqu'il est soumis à des forces de torsion.

Selon une option, le corps de carte 1 comporte au moins une première échancrure 12 sur la glissière 11 d'un bord latéral et au moins une seconde échancrure 12 'sur la glissière 11' du bord latéral opposé placée symétriquement par rapport à la première échancrure 12. L'échancrure d'une carte de type SD originale joue à la fois un rôle de verrou contre l'écriture de données dans la mémoire et de verrou mécanique permettant à l'utilisateur de reconnaître une bonne connexion de la carte dans la fente par un clic caractéristique. Dans le cas de l'adaptateur, les échancrures 12 et 12' servent uniquement de verrou mécanique améliorant également la tenue de l'adaptateur dans la fente et ceci plus particulièrement lorsqu'il est connecté à un câble.

## Revendications

1. Adaptateur pour connecter un appareil hôte à un réseau numérique de communication, ledit adaptateur comprend un corps de carte (1) ayant une première extrémité, munie de contacts, destinée à l'insertion dans une fente de carte aménagée sur l'appareil hôte et une seconde extrémité, opposée à la première extrémité, solidaire à un boîtier (2) destiné à être relié au réseau numérique, l'adaptateur est **caractérisé en ce que** les contacts s'étendent selon une première rangée (3) sur une face le long du bord de la première extrémité du corps de carte (1) et selon une seconde rangée (3') sur l'autre face le long du bord du corps de carte (1) de sorte que les deux rangées (3, 3') sont placées l'une en regard de l'autre avec les contacts d'une rangée disposés en symétrie miroir par rapport aux contacts de l'autre rangée, et **en ce que** le contour du corps de carte (1) est symétrique par rapport à un axe de symétrie (S) perpendiculaire aux extrémités du corps de carte (1), de manière à assurer une insertion dans un sens quelconque du corps de carte (1) dans la fente de l'appareil hôte.

2. Adaptateur selon la revendication 1, **caractérisé en ce que** le boîtier (2) comprend une portion de câble (5) attachée par une extrémité sur une face latérale dudit boîtier (2) de sorte que la portion de câble (5) soit dirigée dans une direction parallèle aux extrémités du corps de carte (1), l'autre extrémité de la portion de câble (5) comportant un connecteur (6) configuré pour la connexion de l'adaptateur au réseau de communication.

3. Adaptateur selon la revendication 1, **caractérisé en ce que** le boîtier (2) comprend une embase (4) montée sur une face latérale, ladite embase (4) étant apte à recevoir une portion de câble munie d'un connecteur approprié à une extrémité, l'autre extrémité de la portion de câble étant reliée au réseau de communication.

4. Adaptateur selon la revendication 1, **caractérisé en ce que** le boîtier (2) contient une interface de connexion sans fil de l'adaptateur au réseau de communication.

5. Adaptateur selon l'une des revendications 1 à 4, **caractérisé en ce que** le corps de carte comprend une pluralité de conducteurs imprimés sur chaque face dudit corps, lesdits conducteurs reliant les contacts de chaque rangée (3, 3') à un dispositif électronique de conversion de signaux électriques logé à l'intérieur du boîtier (2), ledit dispositif électronique étant également relié à une interface apte à connecter l'adaptateur au réseau de communication via un câble ou une liaison hertzienne.

6. Adaptateur selon l'une des revendication 1 à 5 **caractérisé en ce que** les dimensions du corps de carte (1) sont équivalentes à celle d'une carte mémoire du type SD et **en ce que** sur chaque face du corps de carte (1), chaque rangée de contact (3, 3') est équivalente à une rangée de contact de la carte mémoire SD par rapport à la position des contacts et leurs dimensions.

7. Adaptateur selon l'une des revendications 1 à 3 **caractérisé en ce qu'**il est apte à être inséré dans la fente de l'appareil hôte dans un sens quelconque de sorte que la portion de câble (5) soit orientée dans un sens donné et une direction parallèle à la fente dès la sortie du câble hors du boîtier (2) de l'adaptateur.

8. Adaptateur selon l'une des revendication 1 à 7 **caractérisé en ce que** le corps de carte (1) comporte au moins une première échancrure (12) sur un bord latéral et au moins une seconde échancrure (12') sur le bord latéral opposé, lesdites échancrures (12, 12') étant positionnées symétriquement par rapport à l'axe de symétrie (S) du corps de carte (1) et configurées de manière à verrouiller le corps de carte (1) dans la fente après insertion dans un sens quelconque de l'adaptateur dans la fente de l'appareil hôte.
